# EUROPÄISCHE PATENTANMELDUNG

(11) **EP 0 729 284 A2**
(43) Veröffentlichungstag der Anmeldung: **28.08.1996**
(21) Anmeldenummer: 96102711.7
(22) Anmeldetag: 23.02.1996
(51) Int. Cl.: H04Q 7/30, H04Q 7/34

(54) **Mobilfunksystem mit einer in einer Feststation enthaltenen Mithöreinrichtung**

(30) Priorität: 27.02.1995 DE 19506807
(71) Anmelder: Alcatel SEL Aktiengesellschaft, D-70435 Stuttgart (DE); ALCATEL N.V., NL-2288 BH Rijswijk (NL)
(72) Erfinder: Franke, Erich H., 75203 Königsbach-Stein (DE)
(74) Vertreter: Knecht, Ulrich Karl, Dipl.-Ing.

(57) **Zusammenfassung**

Es ist ein Mobilfunksystem angegeben, bei dem es möglich ist, selektiv in Gesprächsverbindungen einzugreifen. Dafür ist in der Funkfeststation eine Aufkläreinrichtung (5) vorhanden, durch die mindestens ein Verkehrskanal aufklärbar ist, d. h. abgehört oder gestört werden kann. Die Aufkläreinrichtung (5) ist an einen Basisbandverarbeitungsteil (1) angeschlossen.

## Beschreibung

Die Erfindung betrift ein Mobilfunksystem gemäß dem Oberbegriff des Patentanspruchs 1 und eine Funkfeststation für ein Mobilfunksystem gemäß dem Oberbegriff des Patentanspruchs 3.

Ein Mobilfunksystem, das z. B. gemäß dem GSM-Standard ausgelegt ist, ist bekannt, z. B. aus dem Buch von M. Mouly et al "The GSM System for Mobile Communications, Eigenverlag, ISBN 2-9507190-0-7, Kapitel 2.1. In diesem zellularen Mobilfunksystem vorhandene Systemkomponenten und deren Funktionen sind in diesem Buch ausführlich erläutert. Zu den Systemkomponenten gehören Funkfeststationen (Base Transceiver Stations, BTS), Funkfeststationssteuereinrichtungen (Base Station Controller, BSC), eine Mobilfunkvermittlungseinrichtung (Mobile services Switching Centre, MSC) und ortsbewegliche Teilnehmer (Mobile Station, MS).

Eine Funkfeststationssteuereinrichtung ist eine Vermittlungseinrichtung mit einer Datenverarbeitungsfähigkeit. Zu den Hauptaufgaben einer Funkfeststationssteuereinrichtung gehören die Verwaltung der Funkkanäle und die Steuerung von notwendig werdenden Übergaben von Funkverbindungen. Eine Funkfeststation enthält Einrichtungen zum Senden und Empfangen von Funksignalen und alle für eine Funkschnittstelle notwendigen Einrichtungen zur Signalverarbeitung.

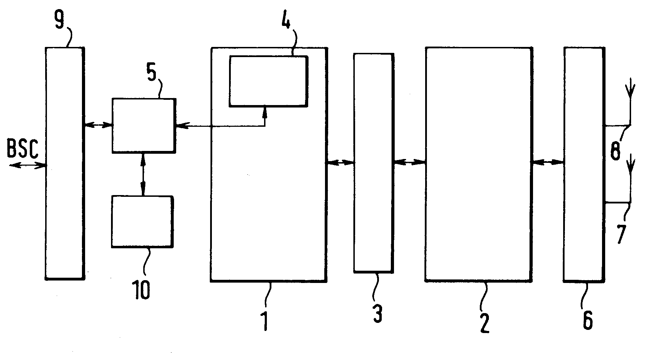

Ein Blockschaltbild einer Funkfeststation und deren Beschreibung sind z. B. aus J. Varin et al," GSM-Basisstationen", Elektrisches Nachrichtenwesen (Alcatel), 2. Quartal 1993, Seiten 155 bis 163 bekannt. Das in Bild 6 gezeigte Blockschaltbild der Funkfeststation zeigt u. a. einen Basisbandverarbeitungsteil und einen Funkteil. Der Basisbandverarbeitungsteil hat eine Rahmenbaugruppe und einen Sende- und Empfangsverarbeitungsteil im Basisband. Der Funkteil hat eine Trägerbaugruppe und einen Sender und Empfänger.

Als weiteres Mobilfunksystem ist ein Bündelfunknetz zu nennen, dessen Versorgungsbereich sich über ein festgelegtes Gebiet erstreckt. Jede Wirtschaftsregion bildet eine Insel. Während konventionelle Funksysteme in der Regel kanalorientiert sind, d. h. eine Beziehung zwischen Benutzergruppen und Funkkanälen besteht, nutzt die Bündelfunk-Technik die vorhandenen Kanäle für alle Benutzer gemeinsam. In einem solchen System werden die Kanäle dynamisch den Verbindungen zugeordnet, womit kein fester Bezug zwischen Teilnehmer und Funkkanal mehr gegeben ist. Als Maß für eine bessere Ausnützung der zur Verfügung stehenden Funkkanäle gegenüber einer statischen Zuordnung zu Benutzergruppen ist ein sogenannter Bündelgewinn festgelegt. Einen Überblick über Bündelfunknetze gibt E. Linder et al, "Bündelfunk - gestern, heute und morgen", ascom Technische Mitteilungen 3/4, 1991, Seiten 25 bis 32.

Bedingt durch die zunehmende Verbreitung von Mobilfunktelefonen in der Bevölkerung, werden die Mobiltelefone auch zunehmend von kriminellen Kreisen benutzt. Dabei besteht das Problem, daß in Gespräche von zu diesen Kreisen gehörenden Personen nicht eingegriffen werden kann, ohne unbeteiligte Mobilfunkteilnehmer zu beeinträchtigen.

Eine Aufgabe der Erfindung ist, ein Mobilfunksystem anzugeben, bei dem authorisierte Personen in Gespräche eingreifen können, ohne unbeteiligte Mobilfunkteilnehmer zu beeinträchtigen. Ein die Aufgabe lösendes Mobilfunksystem ist Gegenstand des Patentanspruchs 1. Außerdem ist es eine Aufgabe der Erfindung, eine Funkfeststation für ein Mobilfunksystem gemäß dem Patentanspruch 1 anzugeben. Eine diese Aufgabe lösende Funkfeststation ist Gegenstand des Patentanspruchs 3. Vorteilhafte Ausgestaltungen der Erfindung sind in den Unteransprüchen angegeben.

Ein Vorteil der Erfindung ist, daß eine erfindungsgemäße Funkfeststation so in ein Observationsgebiet eingebracht werden kann, daß sie für alle in diesem Observationsgebiet vorhandenen Mobilfunktelefone die beste Funkverbindung bietet.

Die Erfindung wird im folgendem anhand einer einzigen Figur näher erläutert. Die Erfindung ist sowohl bei zellularen Mobilfunksystemen als auch bei Mobilfunksystemen einsetzbar, die keine Zellenstruktur haben. Im folgenden wird die Erfindung anhand einer Funkfeststation für ein zellulares Mobilfunksystem beschrieben.

In der einzigen Figur ist ein Blockschaltbild einer Funkfeststation gezeigt, die wie bereits erwähnt eine Komponente eines zellularen Mobilfunksystem ist. Ein solches zellulares Mobilfunksystem ist bekannt (z. B. aus M. Mouly el al), so daß dessen Struktur und weitere Systemkomponenten an dieser Stelle nicht erläutert werden. Das in der Figur gezeigte Blockschaltbild der Funkfeststation entspricht dem aus J. Varin et al bekannten Blockschaltbild (dortiges Bild 6).

Die Funkfeststation hat eine Sende- und eine Empfangsantenne 7, 8, die mittels einer Anschlußeinheit 6 an einen Funkteil 2 angeschlossen sind. Der Funkteil 2 hat eine Trägerbaugruppe, einen Sender und einen Empfänger, die in der Figur nicht gezeigt sind. Der Sender führt eine Modulation, eine Umsetzung auf eine Funkfrequenz und eine Leistungsverstärkung durch, und der Empfänger führt eine Abwärtsmischung, eine Analog-/Digital Wandelung und eine Berechnung des Empfangssignals durch.

Eine Frequenzsprungeinheit 3, in der eine Matrix für ein Frequenzsprungverfahren festgelegt ist, stellt ein Bindeglied zu einem Basisbandverarbeitungsteil 1 dar. In diesem Basisbandverarbeitungsteil 1 ist eine Rahmenbaugruppe 4 vorhanden, die allgemein eine Aufbereitung von Sende- und Empfangssignalen vornimmt, d. h. sie führt den TDMA-Rahmenaufbau aus, sie codiert und verschlüsselt zu sendende Signale und sie decodiert und entschlüsselt empfangene Signale. Die Rahmenbaugruppe 4 kann aus mehreren Rahmeneinheiten bestehen. Eine einzige Rahmeneinheit enthält alle Funktionen zur Durchführung der digitalen Basisband-Datenverarbeitung für acht Verkehrskanäle mit voller Bitfolgefrequenz. Außerdem hat der Basisbandverarbeitungsteil 1 eine Signalisierungsbaugruppe und eine Einrichtung zur Verarbeitung von Sende- und Empfangssignalen im Basisband. Zwischen eine Übertragungseinrichtung 9, die mit einer Funkfeststationssteureinrichtung BSC verbunden ist, und die im Basisbandverarbeitungsteil 1 enthaltene Rahmenbaugruppe 4 ist erfindungsgemäß eine Aufkläreinrichtung 5 geschaltet. Zwischen der Rahmenbaugruppe 4 und der Übertragungseinrichtung 9 werden die Signale als Digitalsignale übertragen und zwar in mehreren Kanälen, sogenannten Verkehrskanälen. Für jedes im Betrieb stattfindende Gespräch (oder jede Datenübertragung) wird ein Verkehrskanal benutzt. An die Aufkläreinrichtung 5 ist eine Steuereinrichtung 10 angeschlossen, so daß jeder Verkehrskanal aufklärbar ist. Die Aufkläreinrichtung 5 hat z. B. folgende Funktionen:
- Sie erlaubt ein Mithören aller Gespräche, die bei Bedarf an eine Einsatzzentrale vermittelt und/oder aufgezeichnet werden.
- Sie erlaubt ein gezieltes Einbringen von Fehlinformation in einen Verkehrskanal, d. h. ein ausgewählter Benutzer hört z. B. ständig ein Belegtsignal.
- Sie erlaubt beim Einsatz von z. B. drei Funkfeststationen eine Bestimmung des Ortes des Benutzers bezüglich dieser Funkfeststationen, z. B. mittels eines bekannten Hyperbelschnittverfahrens.

Neben Gesprächssignalen werden auch zugehörige Signalisierungssignale im Basisbandverarbeitungsteil 1 verarbeitet. Zu den Signalisierungssignalen gehören z. B. die Teilnehmernummern von eingebuchten und aktiven Mobilfunkteilnehmern (Benutzern), und eine sogenannte Gerätekennung eines jeden Mobilfunktelefons. Die Gerätekennung ist einem Mobilfunktelefon fest zugeordnet und kann vom Mobilfunkteilnehmer nicht beeinflußt werden. Mit Hilfe dieser Signalisierungssignale ist eine eindeutige Zuordnung von Gesprächsinhalt und Mobilfunkteilnehmer möglich.

Die Aufkläreinrichtung 5 erhält bereits beim Aufbau einer Funkverbindung Kenntnis darüber, welches Mobilfunkgerät (Gerätekennung) welche Teilnehmernummer ruft.

Mit einer erfindungsgemäßen Funkfeststation ist es möglich, alle Mobilfunktelefone in einem Observationsgebiet zu erfassen, bevor ein Mobilfunkteilnehmer ein Gespräch führt. Dadurch ist eine Selektion der Mobilfunkteilnehmer möglich, wodurch eine Reduzierung der Anzahl von zu überwachenden Gesprächsverbindungen möglich ist.

Da die Aufkläreinrichtung 5 zwischen die Übertragungseinrichtung 9 und die Rahmenbaugruppe 4 geschaltet ist, ist das Mithören von Gesprächen möglich; eine Verschlüsselung der Gespräche und Daten ist im GSM-Standard nur für die Luftschnittstelle vorgesehen.

Die erfindungsgemäße Funkfeststation kann z. B. in einem Fahrzeug untergebracht sein. An die Steuereinrichtung 10 kann ein Bildschirm angeschlossen sein, um die von der Aufkläreinrichtung 5 kommende Information (z. B. Telefonnummern, Teilnehmernamen, Ort des Teilnehmers) graphisch darzustellen. Es ist aber auch möglich, daß die Funkfeststation fest installiert ist. In einem solchen Fall ist die Steuereinrichtung 10 z. B. mit einer räumlich entfernten Einsatzzentrale verbunden.

## Patentansprüche

1. Mobilfunksystem mit mindestens einem ortsbeweglichen Teilnehmer und mit mindestens einer Funkfeststation, die einen Basisbandverarbeitungsteil (1) und einen Funkteil (2) hat,
**dadurch gekennzeichnet,** daß
in der Funkfeststation eine Aufkläreinrichtung (5) vorhanden ist, durch die mindestens ein Verkehrskanal aufklärbar ist.

2. Mobilfunksystem nach Anspruch 1, dadurch gekennzeichnet, daß die Aufkläreinrichtung (5) an den Basisbandverarbeitungsteil (1) angeschlossen ist.

3. Funkfeststation für ein Mobilfunksystem, die einen Basisbandverarbeitungsteil (1) und einen Funkteil (2) hat,
**dadurch gekennzeichnet,** daß eine Aufkläreinrichtung (5) vorhanden ist, die an den Basisbandverarbeitungsteil (1) angeschlossen ist, wodurch mindestens ein Verkehrskanal aufklärbar ist.

4. Mobilfunksystem nach Anspruch 1 oder 2 oder Funkfeststation nach Anspruch 3, dadurch gekennzeichnet, daß an die Aufkläreinrichtung (5) eine Steuereinrichtung (10) anschließbar ist, durch die die Aufkläreinrichtung (5) so steuerbar ist, daß sich der Verkehrskanal abhören, aufzeichnen, stören, unterbrechen und/oder blockieren läßt.
